# EUROPEAN PATENT APPLICATION

(11) **EP 4 454 947 A1**
(43) Date of publication of application: **30.10.2024**
(21) Application number: 24168284.8
(22) Date of filing: 03.04.2024
(51) Int. Cl.: B60Q 1/24, B64D 47/02

(54) **SYSTEM AND METHODS FOR SEARCHLIGHT MOVEMENT CONTROL ASSISTANCE**

(30) Priority: 24.04.2023 US 202318305762
(71) Applicant: Honeywell International Inc., Charlotte, NC 28202 (US)
(72) Inventor: BRAHMBHATT, Kartik, Charlotte 28202 (US); SAXENA, Sunit Kumar, Charlotte 28202 (US); POLICY, Richard, Charlotte 28202 (US)
(74) Representative: Lucas, Peter Lawrence

(57) **Abstract**

Systems and methods are provided for a mobile platform. The systems include an assembly comprising a device, wherein the assembly is configured to controllably articulate to direct the device toward positions on the ground, a human-to-machine input (HMI) device configured to allow a user to manually operate the assembly to execute a slew operation wherein the device is redirected from a first position on the ground to a second position along a desired path, a sensor system configured to sense an attitude of the mobile platform, and a controller configured to, by a processor: receive the attitude from the sensor system, receive a slew command from the HMI device, and modify operation of the assembly, based on the sensor data, during the slew operation to compensate for attitude disturbances such that an actual path along which the device is directed matches the desired path.

## Description

### TECHNICAL FIELD

The present invention generally relates to searchlight control assistance for mobile platforms, and more particularly relates to a system that automatically adjusts searchlight movement control for a mobile platform to accommodate for an attitude of the mobile platform.

### BACKGROUND

Various mobile platforms include searchlight systems capable of articulating a searchlight using manual controls. Typically, the controls operate on a coordinate system (e.g., polar or Cartesian) centered about the location of the searchlight. A user is able to manually direct the searchlight within the coordinate system, for example, represented as a grid on a display. While the mobile platform is level (i.e., zero degrees roll and zero degrees pitch), the movement of the light spot produced by the searchlight is likely to correspond to the desired movement input by the user on the grid. However, attitude changes of the mobile platform (e.g., pitch and/or roll disturbances) can result in the movement of the light spot to divert from the coordinate system. This may cause manual control of the movement of the light spot to be less intuitive for the user. For example, the user may be required to continuously adjust their control of the searchlight as the mobile platform moves to move the light spot along a desired path.

Hence, there is a need for systems and methods that promote searchlight movement control assistance for mobile platforms. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A system is provided for a mobile platform that includes an assembly comprising a device mounted on the mobile platform, wherein the assembly is configured to controllably articulate the device about two or more axes to direct the device toward positions on the ground, a human-to-machine input (HMI) device configured to allow a user to manually operate the assembly to execute a slew operation wherein the device is redirected from a first position on the ground to a second position on the ground along a desired path, wherein the HMI device is configured such that the desired path is along a predetermined coordinate system centered about the mobile platform while level, a sensor system configured to sense an attitude of the mobile platform and generate sensor data that indicates the attitude, and a controller operably coupled to the assembly, the HMI device, and the sensor system, the controller configured to, by a processor: receive the sensor data from the sensor system, receive a slew command from the HMI device, and modify operation of the assembly, based on the sensor data, during the slew operation to compensate for attitude disturbances of the mobile platform such that an actual path along which the device is directed from the first position on the ground to the second position on the ground matches the desired path.

A method is provided for a mobile platform that includes providing an assembly comprising a device mounted on the mobile platform, wherein the assembly is configured to controllably articulate the device about two or more axes to direct the device toward positions on the ground, receiving, by a processor, sensor data including an attitude of a mobile platform, receiving, by a processor, a slew command to execute a slew operation wherein the device is redirected from a first position on the ground to a second position on the ground along a desired path, wherein the slew command is received from a human-to-machine input (HMI) device manually operated by a user, wherein the desired path is along a predetermined coordinate system centered about the mobile platform while level, modifying, by the processor, operation of the assembly, based on the sensor data, to compensate for attitude disturbances of the mobile platform such that an actual path along which the device is directed from the first position on the ground to the second position on the ground matches the desired path.

Furthermore, other desirable features and characteristics of the system and method will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 schematically represents a mobile platform and various details of coordinate systems relative to the mobile platform that may be used with a searchlight movement control assistance system thereof in accordance with an embodiment;
FIG. 2 schematically represents components of the searchlight movement control assistance system of the mobile platform of FIG. 1 in accordance with an embodiment;
FIG. 3 is a dataflow diagram illustrating operation of the searchlight movement control assistance system of FIG. 2 in accordance with an embodiment;
FIG. 4 is a flowchart illustrating a first exemplary method for providing searchlight movement control assistance in accordance with an embodiment;
FIG. 5 is a flowchart illustrating a second exemplary method for providing searchlight movement control assistance in accordance with an embodiment;
FIGS. 6 and 7 schematically represent movement of a searchlight relative to the polar coordinate system without (FIG. 6) and with (FIG. 7) the searchlight movement control assistance system of FIG. 2 in accordance with an embodiment.
FIGS. 8 and 9 schematically represent movement of a searchlight relative to the Cartesian coordinate system without (FIG. 8) and with (FIG. 9) the searchlight movement control assistance system of FIG. 2 in accordance with an embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

Systems and methods disclosed herein provide for searchlight movement control assistance for a mobile platform to accommodate for an attitude of the mobile platform. The system and methods are particularly suitable for use in mobile platforms that include a searchlight system that includes a searchlight configured to emit a beam of light and thereby produce a light spot on an object, and a human-to-machine input (HMI) device configured for manual movement of the searchlight. The systems and methods automatically adjust the movement control of the searchlight to accommodate for attitude disturbances (e.g., pitch and roll) to relieve the operator of the task of accommodating for such disturbances. In various embodiments, the movement control may be configured to operate based on one or more coordinate systems, and the systems and methods may include adjusting the coordinate system(s) (e.g., modify a scale thereof), modifying user input (e.g., slew commands), and/or modifying movement of the searchlight to accommodate for the attitude disturbances. In various embodiments, the systems and methods provide for the operator to manually move the light spot of the searchlight without noticeable differences regardless of whether the mobile platform is level or unlevel.

The mobile platform may be any type of vehicle, such as but not limited to various types of aircraft. It should be noted that the term aircraft, as utilized herein, may include any manned or unmanned object capable of flight. Examples of aircraft may include, but are not limited to, fixed-wing aerial vehicles (e.g., propeller-powered or jet powered), rotary-wing aerial vehicles (e.g., helicopters), manned aircraft, unmanned aircraft (e.g., unmanned aerial vehicles, or UAVs), delivery drones, etc. For convenience, the systems and methods will be described in reference to a manned helicopter; however, as noted the systems and methods are not limited to such application.

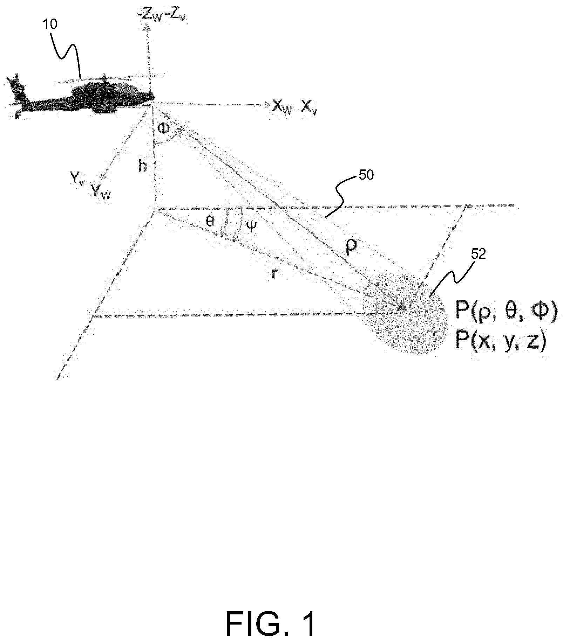

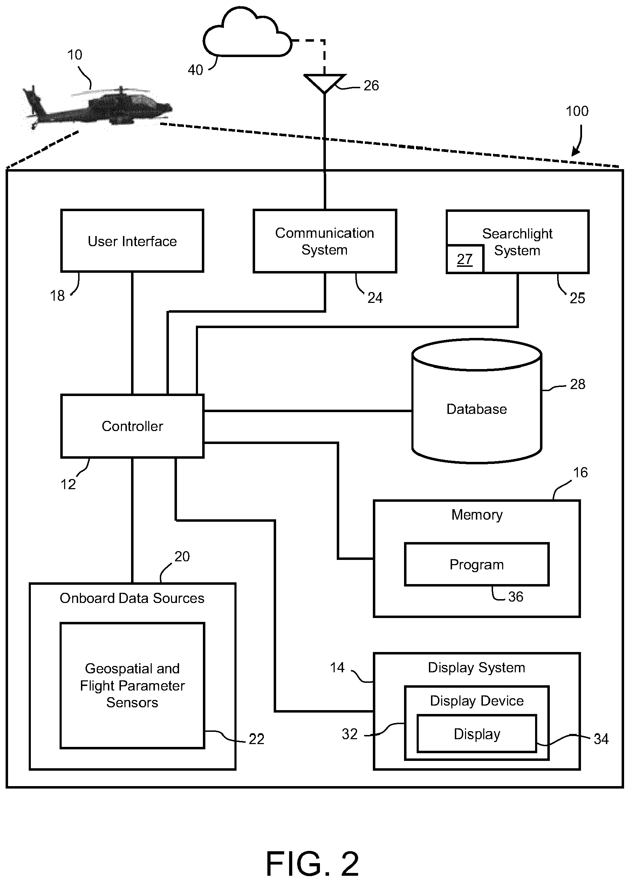

Referring now to FIG. 1 and 2, an aircraft, in this example a helicopter 10, and certain systems thereof are illustrated in accordance with an exemplary and non-limiting embodiment of the present disclosure. A searchlight movement control assistance system 100 may be utilized onboard the helicopter 10 as described herein. As schematically depicted in FIG. 2, the system 100 includes and/or is functionally coupled to the following components or subsystems, each of which may assume the form of a single device or multiple interconnected devices, including, but not limited to, a controller 12 operationally coupled to: at least one display device 32, which may optionally be part of a larger on-board display system 14; computer-readable storage media or memory 16; an optional user interface 18, onboard data sources 20 including, for example, an array of flight system status and geospatial sensors 22, and a searchlight system 25. The system 100 may be separate from or integrated within a flight management system (FMS) and/or a flight control system (FCS). The system 100 may also contain a communication system 24 including an antenna 26, which may wirelessly transmit data to and receive data from various external sources 40 physically and/or geographically remote to the system 100 and/or the helicopter 10.

Although schematically illustrated in FIG. 2 as a single unit, the individual elements and components of the system 100 can be implemented in a distributed manner utilizing any practical number of physically distinct and operatively interconnected pieces of hardware or equipment. When the system 100 is utilized as described herein, the various components of the system 100 will typically all be located onboard the helicopter 10.

The term "controller," as appearing herein, broadly encompasses those components utilized to carry-out or otherwise support the processing functionalities of the system 100. Accordingly, the controller 12 can encompass or may be associated with any number of individual processors, flight control computers, navigational equipment pieces, computer-readable memories (including or in addition to the memory 16), power supplies, storage devices, interface cards, and other standardized components.

In various embodiments, the controller 12 includes at least one processor, a communication bus, and a computer readable storage device or media. The processor performs the computation and control functions of the controller 12. The processor can be any custom made or commercially available processor, a central processing unit (CPU), a graphics processing unit (GPU), an auxiliary processor among several processors associated with the controller 12, a semiconductor-based microprocessor (in the form of a microchip or chip set), a digital signal processor (DSP), any combination thereof, or generally any device for executing instructions. The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the controller 12. The bus serves to transmit programs, data, status and other information or signals between the various components of the helicopter 10. The bus can be any suitable physical or logical means of connecting computer systems and components. This includes, but is not limited to, direct hard-wired connections, fiber optics, infrared, and wireless bus technologies.

The instructions may include one or more separate programs, each of which comprises an ordered listing of executable instructions for implementing logical functions. The instructions, when executed by the processor, receive and process signals from the sensors 22, perform logic, calculations, methods and/or algorithms, and generate data based on the logic, calculations, methods, and/or algorithms. Although only one controller 12 is shown in FIG. 2, embodiments of the helicopter 10 can include any number of controllers 12 that communicate over any suitable communication medium or a combination of communication mediums and that cooperate to process the sensor signals, perform logic, calculations, methods, and/or algorithms, and generate data. In various embodiments, the controller 12 includes or cooperates with at least one firmware and software program (generally, computer-readable instructions that embody an algorithm) for carrying-out the various process tasks, calculations, and control/display functions described herein. During operation, the controller 12 may be programmed with and execute at least one firmware or software program, for example, a program 36, that embodies one or more algorithms, to thereby perform the various process steps, tasks, calculations, and control/display functions described herein.

The controller 12 may exchange data with one or more external sources 40 to support operation of the system 100 in various embodiments. In this case, bidirectional wireless data exchange may occur via the communication system 24 over a communications network, such as a public or private network implemented in accordance with Transmission Control Protocol/Internet Protocol architectures or other conventional protocol standards. Encryption and mutual authentication techniques may be applied, as appropriate, to ensure data security.

In various embodiments, the communication system 24 is configured to support instantaneous (i.e., real time or current) communications between on-board systems, the controller 12, and the one or more external sources 40. The communication system 24 may incorporate one or more transmitters, receivers, and the supporting communications hardware and software required for components of the system 100 to communicate as described herein. In various embodiments, the communication system 24 may have additional communications not directly relied upon herein, such as bidirectional pilot-to-ATC (air traffic control) communications via a datalink, and any other suitable radio communication system that supports communications between the helicopter 10 and various external source(s).

The memory 16 can encompass any number and type of storage media suitable for storing computer-readable code or instructions, such as the program 36, as well as other data generally supporting the operation of the system 100. As can be appreciated, the memory 16 may be part of the controller 12, separate from the controller 12, or part of the controller 12 and part of a separate system. The memory 16 can be any suitable type of storage apparatus, including various types of direct access storage and/or other memory devices.

A source of information suitable for operating one or more systems of the helicopter 10 may be part of the system 100. In certain embodiments, the source is one or more databases 28 employed to receive and store map data, which may be updated on a periodic or iterative basis to ensure data timeliness. In various embodiments, the map data may include various terrain and manmade object locations and elevations and may be stored in the memory 16 or in the one or more databases 28, and referenced by the program 36. In various embodiments, these databases 28 may be available online and accessible remotely by a suitable wireless communication system, such as the communication system 24.

The sensor system 22 supplies various types of data and/or measurements to the controller 12. In various embodiments, the sensor system 22 supplies, without limitation, one or more of: inertial reference system measurements providing a location, Flight Path Angle (FPA) measurements, airspeed data, groundspeed data, vertical speed data, vertical acceleration data, altitude data, attitude data including pitch and roll measurements, yaw data, data related to ownship weight, time/date information, heading information, data related to atmospheric conditions, flight path data, flight track data, radar altitude data, geometric altitude data, wind speed and direction data. Further, in certain embodiments of the system 100, the controller 12, and the other components of the system 100 may be included within or cooperate with any number and type of systems commonly deployed onboard aircraft including, for example, an FMS, an Attitude Heading Reference System (AHRS), an Instrument Landing System (ILS), and/or an Inertial Reference System (IRS).

With continued reference to FIG. 2, the display device 32 can include any number and type of image generating devices on which one or more avionic displays 34 may be produced. In various embodiments, the display device 32 may be affixed to the static structure of the helicopter 10 cockpit as, for example, a Head Down Display (HDD) or Head Up Display (HUD) unit. Alternatively, the display device 32 may assume the form of a movable display device (e.g., a pilot-worn display device) or a portable display device, such as an Electronic Flight Bag (EFB), a laptop, or a tablet computer carried into the helicopter 10 cockpit by a pilot.

At least one avionic display 34 is generated on display device 32 during operation of the system 100. The term "avionic display" as used herein is synonymous with the terms "aircraft-related display" and "cockpit display" and encompasses displays generated in textual, graphical, cartographical, and other formats. The system 100 can generate various types of lateral and vertical avionic displays 34 on which symbology, text annunciations, and other graphics pertaining to flight planning are presented for a pilot to view. The display device 32 is configured to continuously render at least one avionic display 34 showing a terrain environment at a current location of the helicopter 10. The avionic display 34 generated and controlled by the system 100 can include alphanumerical input displays of the type commonly presented on the screens of multi-function control and display units (MCDUs), as well as Control Display Units (CDUs) generally. Specifically, certain embodiments of the avionic displays 34 include one or more two dimensional (2D) avionic displays, such as a horizontal (i.e., lateral) navigation display or vertical navigation display; and/or on one or more three dimensional (3D) avionic displays, such as a Primary Flight Display (PFD) or an exocentric 3D avionic display.

In various embodiments, a human-machine interface, such as a touch screen display, is implemented as an integration of the user interface 18 and the display device 32. Via various display and graphics systems processes, the controller 12 may command and control the touch screen display generating a variety of graphical user interface (GUI) objects or elements, for example, buttons, sliders, and the like, which are used to prompt a user to interact with the human-machine interface to provide user input, and to activate respective functions and provide user feedback, responsive to received user input at the GUI element.

The searchlight assembly 25 may include various components including a searchlight 27 configured to emit a beam of light 50 (FIG. 1) that illuminates a light spot 52 on an object on which the beam of light 50 impinges (e.g., the ground), an actuation system comprising one or more actuators configured to control the movement and position of the searchlight 27 and thereby the direction of the beam of light 50, and a searchlight controller configured to control the actuation system based on preprogrammed instructions and/or user input. Orientation of the searchlight 27, via the actuation system, and therefore the direction of the beam of light 50 and the location of the light spot 52 may be manually controlled with an HMI device, such as a joystick, collective stick grip, multi-axis (way) hatch switch, etc., which may be a component of the user interface 18. In some embodiments, the controller 12 may be a component of the searchlight assembly 25 and configured to determine the pitch and roll corrections based of the actuation system.

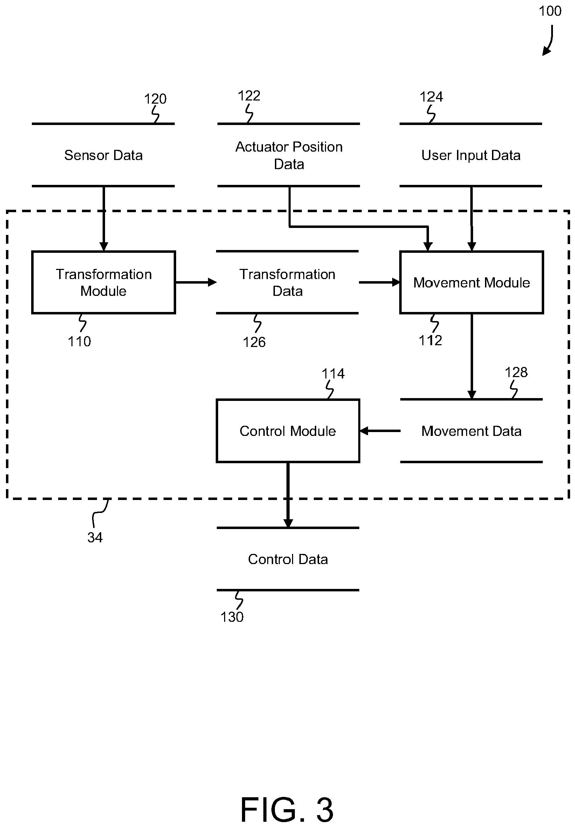

With reference to FIG. 3 and with continued reference to FIGS. 1 and 2, a dataflow diagram illustrates elements of the system 100 of FIG. 2 in accordance with various embodiments. As can be appreciated, various embodiments of the system 100 according to the present disclosure may include any number of modules embedded within the controller 12 which may be combined and/or further partitioned to similarly implement systems and methods described herein. Furthermore, inputs to the system 100 may be received from other control modules (not shown) associated with the helicopter 10, and/or determined/modeled by other sub-modules (not shown) within the controller 12. Furthermore, the inputs might also be subjected to preprocessing, such as sub-sampling, noise-reduction, normalization, feature-extraction, missing data reduction, and the like. In various embodiments, the system 100 includes a searchlight transformation module 110, a movement module 112, and a control module 114.

In various embodiments, the transformation module 110 receives as input sensor data 120 received from the sensors 22. The sensor data 120 includes various data indicating an attitude of the helicopter 10, such as pitch and roll measurements. The transformation module 110 performs an analysis of the attitude of the helicopter 10 and determines adjustments to the movement control of the searchlight system 25. In various embodiments, the movement control may be configured to operate based on one or more coordinate systems, and the transformation module 110 may determine adjustments to the coordinate systems (e.g., modify a scale thereof) to accommodate for the attitude of the helicopter 10. The transformation module 110 generates transformation data 126 that includes various data indicating the determined adjustments to the movement control.

In various embodiments, the movement module 112 receives as input user input data 124 received from the HMI device configured to manually control articulation of the searchlight 27 and the movement of the beam of light 50 emitted therefrom. The user input data 124 includes various data indicating movement instructions (e.g., slew command) for the searchlight system regarding the user's desired articulation of the searchlight 27. The movement module 112 also receives as input actuator position data 122 generated by the searchlight system 25. The actuator position data 122 includes various data indicating positions (e.g., actuator angles) of the actuators of the actuation system. In addition, the movement module 112 receives as input the transformation data 126 received from the transformation module 110. The movement module 112 determines a reference position of the light spot 52 based on the actuator position data 122 and modifies the operation of the searchlight system 25 based on the transformation data 126 and then generates movement data 128 that includes various data indicating modified movement instructions based on the user input data 124.

In various embodiments, the control module 114 receives as input the movement data 128 received from the movement module 112. The control module 114 generates control data 130 that includes various data indicating instructions for the searchlight system 25 to implement the movement instructions. The control module 114 may transmit the control data 130 to the searchlight system 25.

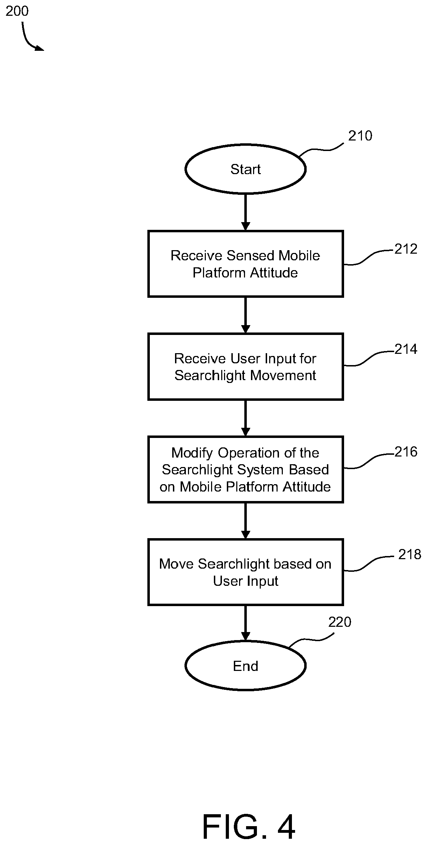

With reference now to FIG. 4 and with continued reference to FIGS. 1-3, a flowchart provides a method 200 for providing searchlight movement control assistance as performed by the system 100, in accordance with exemplary embodiments. As can be appreciated in light of the disclosure, the order of operation within the method 200 is not limited to the sequential execution as illustrated in FIG. 4, but may be performed in one or more varying orders as applicable and in accordance with the present disclosure. In various embodiments, the method 200 can be scheduled to run based on one or more predetermined events (e.g., during slew operations), and/or can run continuously during operation of the helicopter 10.

The method 200 may start at 210. At 212, the method 200 may include receiving, by the processor of the controller 12, sensor data generated by the sensors 22 and/or other systems of the helicopter 10 that includes operating conditions of the helicopter 10 such as pitch, roll, altitude, etc. At 214, the method 200 may include receiving, by the processor, user input data generated by the HMI device upon interaction therewith by the user that includes movement instructions for articulation of the searchlight 27. At 216, the method 200 may include modifying operation of the searchlight system 25 based on the attitude of the helicopter 10 as described in or determined from the sensor data. At 218, the method 200 may include articulating the searchlight 27 to move the light spot 52 as instructed by the user. The method 200 may end at 220.

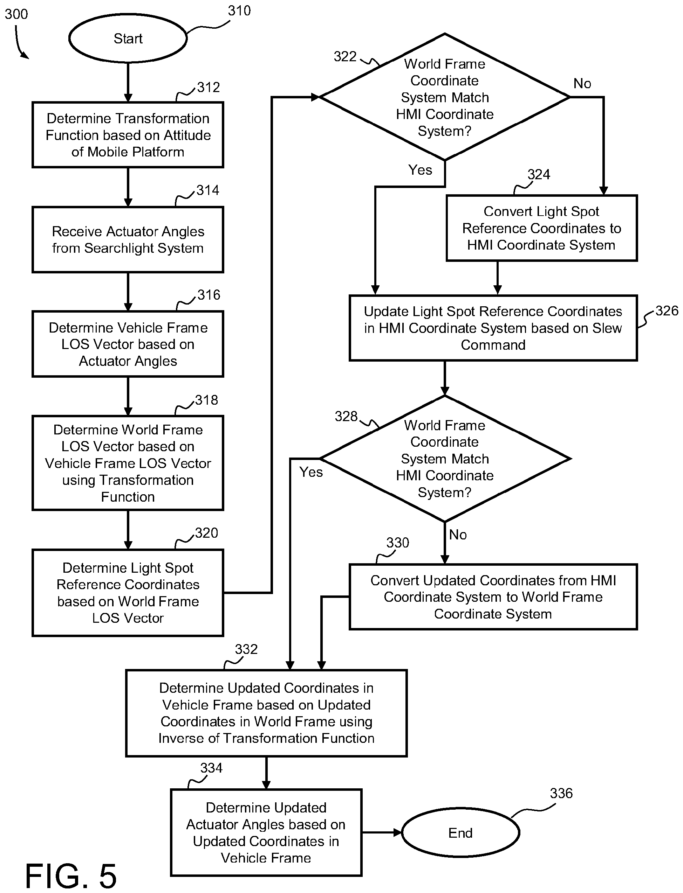

With reference now to FIG. 5 and with continued reference to FIGS. 1-3, a flowchart provides a method 300 for providing searchlight movement control assistance as performed by the system 100, in accordance with exemplary embodiments. As can be appreciated in light of the disclosure, the order of operation within the method 300 is not limited to the sequential execution as illustrated in FIG. 5, but may be performed in one or more varying orders as applicable and in accordance with the present disclosure. In various embodiments, the method 300 can be scheduled to run based on one or more predetermined events (e.g., during slew operations), and/or can run continuously during operation of the helicopter 10.

For method 300, the articulation system of the searchlight system 25 will be referred to operating with independent pan and tilt control, which is controlled in a two axis, spherical coordinate system. That is, the orientation of a light head of the searchlight 27 and its angle (Euler) with respect to the helicopter 10 is defined in terms of elevation (Φ) and azimuth (ψ) which are a function of pan and tilt angles. In order to determine the locus of the light spot 52 on the ground, a slant range ρ is used. Hence, using a 3-tuple {ρ, θ, ψ} the location of the light spot 52 on the ground can be determined as represented in FIG. 1.

Specifically, FIG. 1 presents a pair of reference frames of coordinate systems, including a vehicle frame (XYZᵥ) and a world frame (XYZ_{w}), that may be used by the system 100. The vehicle frame is defined by an Xᵥ-axis, a Yᵥ-axis, and a Zᵥ-axis. The Xᵥ-axis extends outward from a front or a nose of the helicopter 10, the Zᵥ-axis extends downward from an underside or a belly of the helicopter 10, and the Yᵥ-axis extends orthogonal to both the Xᵥ-axis and the Zᵥ-axis. A location of the searchlight 27 on the helicopter 10 represents an origin point of the vehicle frame (XYZᵥ).

The world frame (XYZ_{w}) is defined by X_{w}-axis, a Y_{w}-axis, and a Z_{w}-axis. The Z_{w}-axis is maintained along a gravity vector irrespective of the attitude of the helicopter 10. Therefore, the X_{w}-axis and the Y_{w}-axis form a plane XY_{w} which is perpendicular to the gravity vector and, thus, the Z_{w}-axis. The X_{w}-axis extends outward from the front or the nose of the helicopter 10 and the Y_{w}-axis extends orthogonal to the X_{w}-axis and the Z_{w}-axis. The location of the searchlight 27 on the helicopter 10 represents an origin point of the world frame (XYZ_{w}).

Additional terminology presented in FIG. 1 includes an elevation angle (Φ_{w}) between the Z_{w}-axis and the beam of light 50 in the world frame (XYZ_{w}), an elevation angle (Φᵥ) between the Zᵥ-axis and the beam of light 50 in the vehicle frame (XYZᵥ), which also refers to an angular position of an elevation actuator (Φₐ) of the actuation system of the searchlight system 25, an angle (θ) between the X_{w}-axis and the light spot 52 on the XY_{w} plane in the world frame, an azimuth angle (ψᵥ) between the Xᵥ-axis and the light spot 52 on the XYᵥ plane in the vehicle frame (XYZᵥ), a vector (ρ) representing a range of the beam of light 50 in both the vehicle frame (XYZᵥ) and the world frame (XYZ_{w}) as well as a line of sight (LOS) of the beam of light 50, a vector (r) representing a projection of the vector (ρ) on the XY_{w} plane, and a dimension (h) representing an altitude of the helicopter 10.

Referring again to FIG. 5, the method 300 may start at 310. In various embodiments, the method 300 may begin in response to receiving a slew command (i.e., searchlight control instructions) input by a user via an HMI device (e.g., a 4-way hatch switch). At 312, the method 300 includes sensing and/or receiving the roll and pitch angles of the helicopter 10 and determining based thereon a relation transformation function for converting coordinates from the vehicle frame (XYZᵥ) to the world frame (XYZ_{w}) and vice versa. In some embodiments, the relation transformation function is determined, at least in part, based on a rotation matrix-based transformation matrix. In some alternative embodiments, the relation transformation function is determined, at least in part, based on a quaternion based or an axis-angle based rotation transformation.

At 314, the method 300 includes sensing or receiving actuator angles, azimuth angle (ψₐ) and elevation angle (Φₐ), of the actuation system of the searchlight system 25. At 316, the method 300 includes determine the LOS vector of the beam of light 50 in the vehicle frame (XYZᵥ).At 318, the method 300 includes using the determined relation transformation function to determine the LOS vector in the world frame (XYZ_{w}) based on the LOS vector in the vehicle frame (XYZᵥ).At 320, the method 300 includes determining the X_{w} and Y_{w} coordinates of the light spot 52 as a starting point and/or reference position by projecting the LOS vector in the work frame (XYZ_{w}) onto the XY_{w} plane.

At 322, the method 300 includes determining if the coordinate system of the world frame (XYZ_{w}) matches the coordinate system of the HMI device used by the user to input the slew command. For example, the HMI device may be configured to generate slew commands in the Cartesian or polar coordinate systems. If the type of coordinate systems do not match at 322, the method 300 includes converting, at 324, the reference coordinates of the light spot 52 to the coordinate system of the HMI device. For example, in various embodiments the HMI device may be configured to generate slew commands in in polar coordinates (R-θ). In such embodiments, the system 100 may convert the XY_{w} plane to the polar coordinate system (R-θ), where R is the length of the projection of the LOS vector on the XY_{w} plane and θ is an angle by which the LOS vector is turned clockwise from the X_{w} axis on the XY_{w} plane.

If the type of coordinate systems match at 322, or after the reference coordinates have been converted at 324, the method 300 includes updating, at 326 the reference coordinates of the light spot 52 based on the slew command to define desired, requested, or updated coordinates.

In various embodiments, if the received slew command is configured to articulate the searchlight 27 to Extend (i.e., FWD) the beam of light 50 relative to the helicopter 10, then the system 100 updates the reference coordinate X_{w} (or R_{w}) by integrating +dX_{w} (or +dR_{w}) (delta X/R movement) at dt (delta time) interval to an updated coordinate X'_{w} (or R'_{w}). If the received slew command is configured to articulate the searchlight 27 to Retract (i.e., AFT) the beam of light 50 relative to the helicopter 10, then the system 100 updates the reference coordinate X_{w} (or R_{w}) by integrating -dX_{w} (or -dR_{w}) (delta X/R movement) at dt (delta time) interval to the updated coordinate X'_{w} (or R'_{w}). If the received slew command is configured to articulate the searchlight 27 to move the beam of light 50 to the Right (i.e., Rotate Right (RR)) relative to the helicopter 10, then the system 100 updates the reference coordinate Y_{w} (or θ_{w}) by integrating +dY_{w} (or +dθ_{w}) (delta Y/θ movement) at dt (delta time) interval to an updated coordinate Y'_{w} (or θ'_{w}). If the received slew command is configured to articulate the searchlight 27 to move the beam of light 50 to the Left (i.e., Rotate Left (RL)) relative to the helicopter 10, then the system 100 updates the reference coordinate Yw (or θ_{w}) by integrating -dY_{w} (or -dθ_{w}) (delta Y/θ movement) at dt (delta time) interval to the updated coordinate Y'_{w} (or θ'_{w}). Notably, ±dX_{w} (or ±dR_{w}) and/or ±dY_{w} (or ±dθ_{w}) can be constant or varying with time and/or other parameters like encoder position, vehicle attitude, altitude, etc. to promote optimal performance of the speed of movement on the ground of the beam of light 50.

At 328, if the coordinate system of the world frame (XYZ_{w}) does not match the coordinate system of the HMI device, the method 300 includes converting, at 330, the updated coordinates to the coordinate system of the world frame (XYZ_{w}) (e.g., polar coordinates to Cartesian coordinates).

If the type of coordinate systems match at 328, or after the updated coordinates have been converted at 330, the method 300 includes using, at 332, an inverse of the relational transformation function to determine the updated coordinates in the vehicle frame (XYZᵥ) based on the updated coordinates X'_{w} and Y'_{w} in the world frame (XYZ_{w}).

At 334, the method 300 includes determining desired, requested, or updated angular positions for the actuators (azimuth) and (elevation) based on the updated coordinates in the vehicle frame (XYZᵥ) using Cartesian-to-polar conversion. The method 300 may include articulating or causing articulation of the actuators based on the updated angular positions for the actuators. The method 300 may end at 336.

In various embodiments, the methods may periodically or continuously determine the updated coordinates, determine the updated actuator angles based the updated coordinates, and cause the light spot 50 to move as directed by the user and/or remain lock or latched to a specific position in the world frame (XYZ_{w}).For example, while the slew command is on (e.g., active or high), at every interval dt (delta time), the system 100 may update the relation transformation function based on the current roll and pitch of the helicopter 10, determine the updated coordinates using the relation transformation function, and determine corresponding updated angular positions for both of the actuators based on the updated coordinates using an inverse of the relation transformation function.

While the slew command is off (e.g., inactive or low), the reference and/or updated coordinates do not change and may be locked or latched to the previously determined updated coordinates. For example, at every interval dt (delta time), the system 100 may update the relation transformation function based on the current roll and pitch of the helicopter 10, determine the updated actuator positions for both actuators based on the previously determined updated coordinates using an inverse of the relation transformation function.

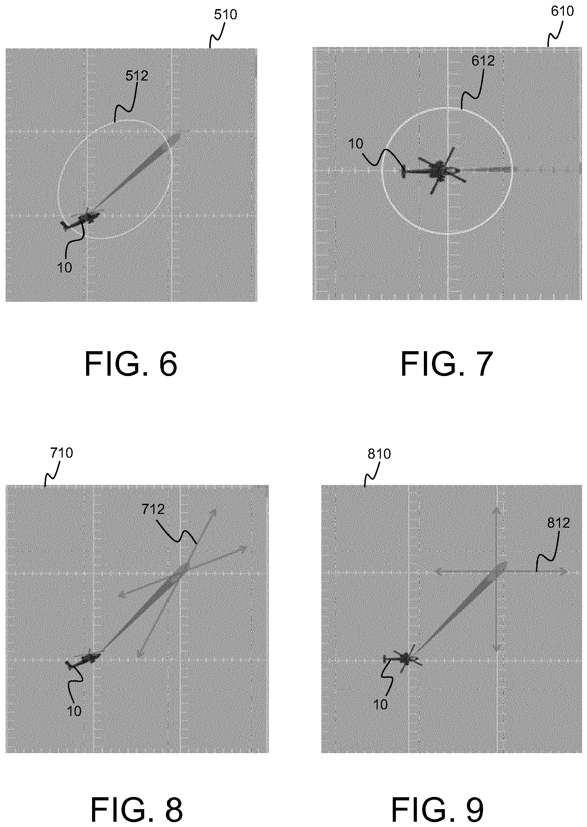

The systems and methods disclosed herein provide various benefits over certain existing systems and methods. For example, the system 100 provides for the movement of the beam of light 50 to match the coordinate system used by the user regardless of the attitude of the helicopter 10, thereby promoting an intuitive control experience. FIGS. 6-9 illustrate examples of certain aspects this concept. In these figures, the helicopter 10 is represented on a grid corresponding to a coordinate system. FIGS. 6 and 7 illustrate the polar coordinate systems 510 and 610, respectively, and FIGS. 8 and 9 illustrate the Cartesian coordinate system 710 and 810, respectively. FIGS. 6 and 8 represent the system 100 as inactive and FIGS. 7 and 9 represent the system 100 as active. In FIG. 6, the movement of the beam of light 50 is skewed relative to the grid to define an oval-like path of movement 512, whereas in FIG. 7 the movement of the beam of light 50 matches the grid to define a circular path of movement 612. In FIG. 8, the movement of the beam of light 50 is skewed relative to the grid to define a path of movement 712, whereas in FIG. 9 the movement of the beam of light 50 matches the grid to define a path of movement 812.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system, comprising:
an assembly comprising a device mounted on a mobile platform, wherein the assembly is configured to controllably articulate the device about two or more axes to direct the device toward positions on the ground;
a human-to-machine input (HMI) device configured to allow a user to manually operate the assembly to execute a slew operation wherein the device is redirected from a first position on the ground to a second position on the ground along a desired path, wherein the HMI device is configured such that the desired path is along a predetermined coordinate system centered about the mobile platform while level;
a sensor system configured to sense an attitude of the mobile platform and generate sensor data that indicates the attitude; and
a controller operably coupled to the assembly, the HMI device, and the sensor system, the controller configured to, by a processor:
receive the sensor data from the sensor system;
receive a slew command from the HMI device; and
modify operation of the assembly, based on the sensor data, during the slew operation to compensate for attitude disturbances of the mobile platform such that an actual path along which the device is directed from the first position on the ground to the second position on the ground matches the desired path.

2. The system of claim 1, wherein the controller is configured to, by the processor, continuously modify the operation of the assembly, based on the sensor data, to compensate for attitude disturbances of the mobile platform while the HMI device is continuously redirecting the device along a continuous desired path such that the actual path along which the device is directed matches the continuous desired path.

3. The system of claim 1, wherein the controller is configured to, by the processor, adjust the assembly after the slew operation to compensate for attitude disturbances of the mobile platform such that the device remains directed toward the second position on the ground.

4. The system of claim 1, wherein the assembly is configured to controllably articulate the device about only two axis.

5. The system of claim 1, wherein:
the predetermined coordinate system is the Cartesian coordinate system and the HMI device is configured to operate based on the polar coordinate system; or
the predetermined coordinate system is the polar coordinate system and the HMI device is configured to operation based on the Cartesian coordinate system.

6. The system of claim 1, wherein the controller is configured to, by the processor:
determine reference coordinates of the first position on the ground;
update the reference coordinates based on the slew command to generate updated coordinates; and
articulate the device to the second position on the ground based on the updated coordinates.

7. The system of claim 6, wherein the controller is configured to, by the processor, determine the reference coordinates by:
establish a reference mobile platform frame based on the mobile platform and a reference world frame based on the mobile platform in relation to a surrounding environment;
determine an angular position of the device;
determine a relational transformation function between the reference mobile platform frame and the reference world frame based on the attitude of the mobile platform; and
convert the angular position of the device using the relational transformation function to define the reference coordinates.

8. The system of claim 7, wherein the controller is configured to, by the processor:
convert the updated coordinates from the reference world frame to the reference mobile platform frame using an inverse of the relational transformation; and
modify the angular position of the device based on the updated coordinates in the reference mobile platform frame.

9. A method, comprising:
providing an assembly comprising a device mounted on a mobile platform, wherein the assembly is configured to controllably articulate the device about two or more axes to direct the device toward positions on the ground;
receiving, by a processor, sensor data including an attitude of a mobile platform;
receiving, by a processor, a slew command to execute a slew operation wherein the device is redirected from a first position on the ground to a second position on the ground along a desired path, wherein the slew command is received from a human-to-machine input (HMI) device manually operated by a user, wherein the desired path is along a predetermined coordinate system centered about the mobile platform while level;
modifying, by the processor, operation of the assembly, based on the sensor data, to compensate for attitude disturbances of the mobile platform such that an actual path along which the device is directed from the first position on the ground to the second position on the ground matches the desired path.

10. The method of claim 9, further comprising continuously modifying operation of the assembly, based on the sensor data, to compensate for attitude disturbances of the mobile platform while the user is continuously redirecting the device, via the HMI device, along a continuous desired path such that the actual path along which the device is directed matches the continuous desired path.

11. The method of claim 9, wherein the device is a searchlight configured to emit a beam of light and direct the beam of light to produce a light spot illuminating the positions on the ground, wherein modifying the operation of the assembly, based on the sensor data, compensates for the attitude disturbances of the mobile platform such that the actual path along which the light spot moves on the ground matches the desired path.

12. The method of claim 9, wherein:
the predetermined coordinate system is the Cartesian coordinate system and the HMI device is configured to operate based on the polar coordinate system; or
the predetermined coordinate system is the polar coordinate system and the HMI device is configured to operation based on the Cartesian coordinate system.

13. The method of claim 9, further comprising:
determining reference coordinates of the first position on the ground;
updating the reference coordinates based on the slew command to generate updated coordinates; and
articulating the device to the second position on the ground based on the updated coordinates.

14. The method of claim 13, wherein determining the reference coordinates is performed by:
establishing a reference mobile platform frame based on the mobile platform and a reference world frame based on the mobile platform in relation to a surrounding environment;
determining an angular position of the device;
determining a relational transformation function between the reference mobile platform frame and the reference world frame based on the attitude of the mobile platform; and
converting the angular position of the device using the relational transformation function to define the reference coordinates.

15. The method of claim 14, further comprising:
converting the updated coordinates from the reference world frame to the reference mobile platform frame using an inverse of the relational transformation; and
modifying the angular position of the device based on the updated coordinates in the reference mobile platform frame.
